# EUROPEAN PATENT APPLICATION

(11) **EP 4 489 164 A1**
(43) Date of publication of application: **08.01.2025**
(21) Application number: 23760133.1
(22) Date of filing: 24.02.2023
(51) Int. Cl.: H01M 10/052, H01M 4/134, H01M 4/40, H01M 10/0568, H01M 10/0569, H01M 10/0587, H01M 50/107, H01M 50/443, H01M 50/451

(54) **CYLINDRICAL LITHIUM SECONDARY BATTERY**

(30) Priority: 28.02.2022 JP 2022029108
(71) Applicant: PANASONIC INTELLECTUAL PROPERTY MANAGEMENT CO., LTD., Kadoma-shi Osaka 571-0057 (JP)
(72) Inventor: KANO, Akira, Kadoma-shi, Osaka 571-0057 (JP); INOUE, Takahiro, Kadoma-shi, Osaka 571-0057 (JP)
(74) Representative: Novagraaf International SA
(86) International application number: PCT/JP2023/006877
(87) International publication number: WO 2023/163135

(57) **Abstract**

A cylindrical lithium secondary battery including a battery case of a bottomed cylindrical shape having an opening, a wound electrode group and a nonaqueous electrolyte which are housed in the battery case, and a sealing member sealing the opening. The wound electrode group includes a positive electrode, a negative electrode, and a separator interposed between the positive electrode and the negative electrode. At the negative electrode, lithium metal deposits during charging and dissolves in the nonaqueous electrolyte during discharging. The nonaqueous electrolyte contains an electrolyte salt, and a solvent. The solvent contains an ether compound as a major component. The amount of the nonaqueous electrolyte per 1 mAh of discharge capacity of the lithium secondary battery is 2.5 µL or more and 6.5 µL or less.

## Description

### [Technical Field]

The present invention relates to a cylindrical lithium secondary battery.

### [Background Art]

As a nonaqueous electrolyte secondary battery superior in capacity to lithium-ion batteries, a lithium secondary battery (lithium-metal secondary battery) is promising. In the lithium secondary battery, lithium metal deposits on the negative electrode during charging, and the lithium metal dissolves in the nonaqueous electrolyte during discharging.

Patent Literature 1 proposes a nonaqueous liquid electrolyte battery using metal lithium as a negative electrode active material, copper oxide as a positive electrode active material, and a nonaqueous solvent as a liquid electrolyte, in which the amount of the liquid electrolyte is regulated to 0.15 µL or more per 1 mAh of theoretical electric capacity of the copper oxide. In the nonaqueous liquid electrolyte battery, the amount of the liquid electrolyte may be regulated to 0.15 to 0.60 µL per 1 mAh of theoretical electric capacity of the copper oxide.

Patent Literature 2 proposes a nonaqueous liquid electrolyte secondary battery including: an electrode group having a positive electrode plate, a negative electrode plate, and a separator; and a nonaqueous liquid electrolyte, in which the amount of the nonaqueous liquid electrolyte is 1.3 to 1.8 µL per 1 mAh of discharge capacity.

### [Citation List]

### [Patent Literature]

Patent Literature 1: Japanese Laid-Open Patent Publication No. S62-126560
Patent Literature 2: Japanese Laid-Open Patent Publication No. 2007-220455

### [Summary of Invention]

### [Technical Problem]

Lithium metal is highly active. Therefore, in a lithium secondary battery, in which lithium metal deposits on the negative electrode during charging, and the lithium metal dissolves in the nonaqueous electrolyte during discharging, the decomposition (side reaction) of the nonaqueous electrolyte tends to be facilitated with repeated charge-discharge cycles. In addition to the consumption of nonaqueous electrolyte by the side reaction, due to considerable expansion and contraction of the negative electrode of the lithium secondary battery, local depletion of nonaqueous electrolyte tends to occur. Therefore, the capacity of the lithium secondary battery tends to easily drop.

### [Solution to Problem]

One aspect of the present invention relates to a cylindrical lithium secondary battery, including: a battery case of a bottomed cylindrical shape having an opening; a wound electrode group and a nonaqueous electrolyte which are housed in the battery case; and a sealing member sealing the opening, wherein the wound electrode group includes a positive electrode, a negative electrode, and a separator interposed between the positive electrode and the negative electrode, at the negative electrode, lithium metal deposits during charging and dissolves in the nonaqueous electrolyte during discharging, the nonaqueous electrolyte contains an electrolyte salt, and a solvent, the solvent contains an ether compound as a major component, and an amount of the nonaqueous electrolyte per 1 mAh of discharge capacity of the lithium secondary battery is 2.5 µL (microliters) or more and 6.5 µL or less.

### [Advantageous Effects of Invention]

According to the lithium secondary battery according to the present disclosure, it is possible to suppress the capacity drop associated with charge-discharge cycles.

While the novel features of the invention are set forth particularly in the appended claims, the invention, both as to organization and content, will be better understood and appreciated, along with other objects and features thereof, from the following detailed description taken in conjunction with the drawings.

### [Brief Description of Drawing]

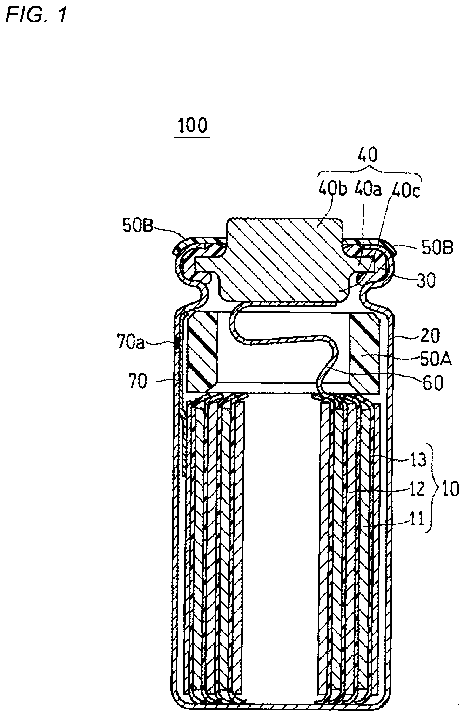

[FIG. 1] A schematic longitudinal cross-sectional view of a cylindrical lithium secondary battery according to an embodiment of the present invention.

### [Description of Embodiments]

Embodiments of the present disclosure will be described below by way of examples, but the present disclosure is not limited to the examples described below. In the following description, specific numerical values and materials are exemplified in some cases, but other numerical values and other materials may be adopted as long as the effects of the present disclosure can be obtained. For the constituent elements other than those characteristic of the present disclosure, any known constituent elements for secondary batteries may be adopted. In the present specification, when referring to "a range of a numerical value A to a numerical value B," the range includes the numerical value A and the numerical value B.

The cylindrical lithium secondary battery according to an embodiment of the present invention includes a battery case of a bottomed cylindrical shape having an opening, a wound electrode group and a nonaqueous electrolyte which are housed in the battery case, and a sealing member (or sealing plate) sealing the opening. Here, the cylindrical shape means a shape having a cylindrical tube portion. The outline of the cross section of the tube portion perpendicular to the winding axis of the electrode group, however, may not be strictly circular, and may be elliptical and the like. The sealing member may be of any shape that fits along the shape of the opening, and may be disc-shaped.

The wound electrode group includes a positive electrode, a negative electrode, and a separator interposed between the positive electrode and the negative electrode. The wound electrode group is constituted by winding the positive electrode and the negative electrode, with the separator interposed therebetween, around a predetermined winding core. The positive electrode, the negative electrode, and the separator may each be, for example, in the form of a long sheet. The winding core is usually pulled out from the center of the electrode group.

At the negative electrode, lithium metal deposits during charging, and the lithium metal dissolves in the nonaqueous electrolyte during discharging. The lithium secondary battery of the present disclosure is also called a lithium-metal secondary battery. Specifically, the negative electrode has at least a negative electrode current collector, and lithium metal deposits directly or indirectly on the negative electrode current collector.

In the lithium secondary battery, for example, 70% or more of the rated capacity is developed through deposition and dissolution of lithium metal. The electron migration at the negative electrode during charging and during discharging is mainly due to the deposition and dissolution of lithium metal at the negative electrode. Specifically, 70 to 100% (e.g., 80 to 100% or 90 to 100%) of the electron migration (in other words, current flow) at the negative electrode during charging and during discharging is due to the deposition and dissolution of lithium metal. That is, the negative electrode according to the present disclosure differs from a negative electrode in which the electron migration at the negative electrode during charging and during discharging is mainly due to the absorption and release of lithium ions into or from the negative electrode active material (graphite etc.).

In a battery configured to allow lithium metal to deposit at the negative electrode during charging, the open circuit potential (OCV: open circuit voltage) of the negative electrode at full charge is, for example, 70 mV or less, relative to lithium metal (lithium dissolution-deposition potential). Being at full charge refers to a state where, when the rated capacity of the battery is denoted by C, the battery is charged to a state of charge (SOC) of, for example, 0.98×C or more. The open circuit potential (OCV) of the negative electrode at full charge can be measured by disassembling the battery at full charge in an argon atmosphere to take out the negative electrode, and assembling it into a cell for measurement, using lithium metal as a counter electrode. The nonaqueous electrolyte of the cell may be of the same composition as the nonaqueous electrolyte in the disassembled battery.

The nonaqueous electrolyte contains an electrolyte salt, and a solvent. The solvent contains an ether compound as a major component. Here, the major component refers to a component occupying 50 mass% or more, even 70 mass% or more of the solvent. The content of the ether compound in the nonaqueous electrolyte may be, for example, 80 mass% or more. The ether compound suppresses the occurrence of side reactions between the nonaqueous electrolyte and the highly active lithium metal, and thus, the consumption of nonaqueous electrolyte by the side reaction can be reduced. Therefore, even though the negative electrode expands considerably, local depletion of nonaqueous electrolyte hardly occurs. Therefore, the capacity drop in the lithium secondary battery associated with charge-discharge cycles can be suppressed.

There is a limit, however, in preventing the side reaction between the highly active lithium metal and the nonaqueous electrolyte. Moreover, the expansion of the negative electrode is large. It is therefore necessary to take some countermeasures against local depletion of nonaqueous electrolyte. In this regard, in the present disclosure, the amount of the nonaqueous electrolyte per 1 mAh of discharge capacity of the lithium secondary battery is controlled to be 2.5 µL or more and 6.5 µL or less (preferably 2.9 µL or more and 6.5 µL or less). The amount of the nonaqueous electrolyte per 1 mAh of discharge capacity may be 3.5 µL or more, or 4.0 µL or more.

When the amount of the nonaqueous electrolyte per 1 mAh of discharge capacity of the lithium secondary battery is less than 2.5 µL, the degree of local depletion of the nonaqueous electrolyte increases, and the amount of capacity drop of the lithium secondary battery associated with charge-discharge cycles increases.

On the other hand, when the amount of the nonaqueous electrolyte is increased excessively in an attempt to prevent electrolyte depletion, in the event of abnormality, due to the heat generated by the reaction between the flammable nonaqueous electrolyte and the highly active lithium metal, it may become difficult to ensure sufficient safety in some cases. By controlling the amount of the nonaqueous electrolyte per 1 mAh of discharge capacity within the above range, it is possible to suppress the capacity drop associated with charge-discharge cycles, and in the event of abnormality, ensure sufficient safety.

The "discharge capacity" of the lithium secondary battery is a discharged capacity when the battery is charged at a predetermined current value (e.g., 0.1 It) to a predetermined end-of-charge voltage (corresponding to SOC = 100%) and then, discharged at a predetermined current value (e.g., 0.1 It) to a predetermined end-of-discharge voltage (depth of discharge (DOD) = 100%). Here, the symbol "It" represents an hour rate. When the quantity of electricity equivalent to a rated capacity C (mAh) of a lithium secondary battery is flown in t hour(s) (h), the current value I (mA) at the t-hour rate is expressed as C/t. Although depending on the battery size, for example, in the case of a later-described "pin-type battery", the rated capacity of the lithium secondary battery may be, 15 mAh to 80 mAh, and may be 15 mAh to 60 mAh.

In calculating the amount of the nonaqueous electrolyte per 1 mAh of discharge capacity, the discharge capacity is preferably an initial discharge capacity. The initial discharge capacity is, for example, a discharge capacity when a battery after break-in charge and discharge is subjected to charging and discharging under the above conditions, or may be a discharge capacity when a battery after break-in charge and discharge is left for a predetermined period of time (e.g., within 3 months) and then subjected to charging and discharging under the above conditions. For example, in the case of a commercially available lithium secondary battery, the discharge capacity when the battery is subjected to charging and discharging under the above conditions at the time of first use can be considered as equivalent to the initial discharge capacity.

In one example of the lithium secondary battery, the outer diameter R may be 3 mm or more and 6.5 mm or less, and the height H may be 15 mm or more and 65 mm or less. The outer diameter R may be 3 mm to 5.5 mm. The height H may be 15 to 45 mm. The outer diameter R of the lithium secondary battery is the maximum outer diameter of the battery case in the battery (battery after fabrication). The height H of the battery is the height of the battery after fabrication, and is the distance between the bottom surface of the battery (outer bottom surface of the battery case) and the top surface of the battery (top surface of the sealing member). The cylindrical lithium secondary battery with a small outer diameter R as described above is hereinafter sometimes referred to as a "pin-type battery."

In the pin-type battery, while the inner volume of the battery case is limited, an electrode group having sufficient capacity is to be housed therein. Therefore, the amount of nonaqueous electrolyte that can be housed is limited. On the other hand, in the lithium secondary battery, in which much of the rated capacity is developed through deposition and dissolution of lithium metal, achieving high capacity is possible. Therefore, the amount of nonaqueous electrolyte can be relatively easily increased within the range that can ensure sufficient safety. In addition, since the nonaqueous electrolyte hardly infiltrates into the lithium metal, the positive electrode can be impregnated with more nonaqueous electrolyte. Presumably because of this, the capacity drop suppression effect by the increase of the amount of the nonaqueous electrolyte becomes remarkable.

When the major component of the solvent is an ether compound, the reaction between the nonaqueous electrolyte and the highly active lithium metal is suppressed even in the event of abnormality, and ensuring sufficient safety is possible. On the other hand, when a common carbonic acid ester is used as a solvent for nonaqueous electrolyte, it is difficult to suppress the reaction between the nonaqueous electrolyte and the lithium metal even though the amount of the nonaqueous electrolyte per 1 mAh of discharge capacity is less than 2.5 µL. Such a remarkable difference in safety due to the use of different solvents is noticeable especially in the pin-type battery, in which the inner volume of the battery case is small. In the pin-type battery, the nonaqueous electrolyte occupies a large proportion in the inner volume of the battery case as compared to the batteries of general size. It is considered therefore that the influence of the solvent is strongly reflected in the safety of the battery.

The packing ratio in the battery is, for example, 71% or more, preferably 72% or more. The packing ratio is 95% or less, preferably 93% or less, and for securing more excellent charge-discharge cycle characteristics, preferably 90% or less. These lower and upper limits can be combined in any combination. The packing ratio is, for example, 71 to 95%, and may be 71 to 93% or 72 to 93%. When the packing ratio is 95% or less, the expansion and contraction of the electrode during charging and discharging are not restricted considerably, and favorable cycle characteristics are likely to be obtained.

The packing ratio means the percentage (vol%) of solid and liquid components housed in the battery case in the inner volume of the battery case. The sum of the percentage (vol%) of the remaining space in the inner volume of the battery case and the packing ratio (vol%) is 100 vol%. The solid and liquid components include, for example, an electrode group (i.e., electrodes and separator), a nonaqueous electrolyte, leads, and an insulating ring disposed between the sealing member and the electrode group. For example, the volumes of the solid components, such as the leads and the insulating ring, can be calculated from the sizes of the solid components. The volumes of the solid components, such as the electrodes and the separator, can be calculated, based on the mass of each solid component and the specific gravity of the material constituting each solid component. The volumes of the liquid components, such as the nonaqueous electrolyte, can be determined by recovering them from the battery and weighing them.

The packing ratio is preferably an initial packing ratio. The initial packing ratio is, for example, the packing ratio when a battery after break-in charge and discharge is subjected to charging and discharging under the above conditions, or may be the packing ratio when a battery after break-in charge and discharge is left for a predetermined time (e.g., within 3 months). For example, in the case of a commercially available lithium secondary battery, the packing ratio before the first use can be considered to be equivalent to the initial packing ratio.

In the following, the constituent elements of the cylindrical lithium secondary battery will be specifically described.

### (Negative electrode)

The negative electrode has at least a negative electrode current collector. Lithium metal deposits on a surface of the negative electrode during charging. Specifically, lithium ions contained in the nonaqueous electrolyte receive electrons on the negative electrode during charging, to be lithium metal, which deposits on a surface of the negative electrode. The lithium metal deposited on the surface of the negative electrode dissolves as lithium ions in the nonaqueous electrolyte during discharging. The lithium ions contained in the nonaqueous electrolyte may be derived from the lithium salt added to the nonaqueous electrolyte, may be supplied from the positive electrode active material during charging, and may be both of them.

The negative electrode may have a negative electrode current collector, and a sheet of lithium metal or lithium alloy adhering to a surface of the negative electrode current collector. In other words, the negative electrode current collector may be provided in advance with a base layer containing lithium metal. The lithium alloy can contain an element, such as aluminum, magnesium, indium, and zinc, in addition to lithium. By providing a base layer containing lithium metal to allow lithium metal to deposit thereon during charging, dendritic deposition can be suppressed. The thickness of the base layer containing lithium metal may be, for example, in the range of 5 µm to 25 µm, but not limited thereto.

The negative electrode may include a lithium-ion storage layer (layer that develops capacity through absorption and release of lithium ions into and from the negative electrode active material, such as graphite) supported on the negative electrode current collector. Even in this case, the open circuit potential of the negative electrode at full charge may be 70 mV or less, relative to lithium metal (lithium dissolution-deposition potential). When the open circuit potential of the negative electrode at full charge is 70 mV or less, lithium metal is present on the surface of the lithium-ion storage layer at full charge.

The lithium-ion storage layer is a negative electrode mixture containing a negative electrode active material formed in a layer. The negative electrode mixture may include, in addition to the negative electrode active material, a binder, a thickener, a conductive material, and the like.

Examples of the negative electrode active material include a carbonaceous material, a Si-containing material, and a Sn-containing material. The negative electrode may include the negative electrode active material singly or in combination of two or more kinds. Examples of the carbonaceous material include graphite, graphitizable carbon (soft carbon) and non-graphitizable carbon (hard carbon).

The conductive material is, for example, a carbon material. Examples of the carbon material include carbon black, acetylene black, Ketjen black, carbon nanotubes, and graphite.

The binder may be, for example, a fluorocarbon resin, a polyacrylonitrile, a polyimide resin, an acrylic resin, a polyolefin resin, a rubbery polymer, and the like. Examples of the fluorocarbon resin include polytetrafluoroethylene, and polyvinylidene fluoride.

The negative electrode current collector is an electrically conductive sheet. As the conductive sheet, foil, film, and the like are used.

The material of the negative electrode current collector (conductive sheet) may be any conductive material other than lithium metal and a lithium alloy. The conductive material may be a metal material, such as a metal and an alloy. The conductive material is preferably a material that does not react with lithium. Specifically, preferred is a material that forms neither an alloy nor an intermetallic compound with lithium. Such a conductive material is exemplified by copper (Cu), nickel (Ni), iron (Fe), and an alloy of one or more of these metal elements, or graphite having a basal plane predominately exposed on its surface. Examples of the alloy include a copper alloy and a stainless steel (SUS). In particular, copper and/or copper alloy that has high electrical conductivity are preferred.

The thickness of the negative electrode current collector is, for example, 5 µm or more and 300 µm or less, but not limited thereto.

### (Positive electrode)

The positive electrode includes, for example, a positive electrode current collector and a positive electrode mixture layer supported on the positive electrode current collector. The positive electrode mixture layer contains, for example, a positive electrode active material, a conductive material, and a binder. The positive electrode mixture layer may be formed only on one side or on both sides of the positive electrode current collector. The positive electrode is obtained by, for example, applying a positive electrode mixture slurry containing a positive electrode active material, a conductive material, and a binder on both sides of a positive electrode current collector, drying the applied film, and then rolling.

The positive electrode active material is a material that absorbs and releases lithium ions. Examples of positive electrode active material include a lithium-containing transition metal oxide, a transition metal fluoride, a polyanion, a fluorinated polyanion, and a transition metal sulfide. In particular, a lithium-containing transition metal oxide is preferred because of its inexpensive manufacturing cost and high average discharge voltage.

The lithium contained in the lithium-containing transition metal oxide is released from the positive electrode during charging in the form of lithium ions, and deposits in the form of lithium metal on the negative electrode or the negative electrode current collector. During discharging, the lithium metal dissolves from the negative electrode, to release lithium ions, which are absorbed into the composite oxide of the positive electrode. That is, lithium ions involved in charging and discharging are mostly derived from the solute in the nonaqueous electrolyte and the positive electrode active material.

Examples of the transition metal element contained in the lithium-containing transition metal oxide include Sc, Ti, V, Cr, Mn, Fe, Co, Ni, Cu, Y, Zr, and W. The lithium-containing transition metal oxide may contain the transition metal element singly or in combination of two or more kinds. The transition metal element may be Co, Ni, and/or Mn. The lithium-containing transition metal oxide can contain one or more kinds of typical metal elements, as necessary. Examples of the typical metal element include Mg, Al, Ca, Zn, Ga, Ge, Sn, Sb, Pb, and Bi. The typical metal element may be Al or the like.

Among the lithium-containing transition metal oxides, a composite oxide containing Co and containing Ni and/or Mn as transition metal elements, optionally containing Al, and having a layered rock-salt type crystal structure is preferred for achieving a high capacity. In this case, in the lithium secondary battery, a molar ratio mLi/mM of a total amount mLi of the lithium that the positive electrode and the negative electrode have, to an amount mM of the metal M other than lithium that the positive electrode has, may be set to, for example, 2.0 or less.

As the binder, the conductive material, and others, for example, those exemplified for the negative electrode can be used. The shape and the thickness of the positive electrode current collector can be selected from the shape and the range of the positive electrode current collector.

The material of the positive electrode current collector (conductive sheet) is, for example, a metal material containing Al, Ti, Fe, and the like. The metal material may be Al, an Al alloy, Ti, a Ti alloy, an Fe alloy, and the like. The Fe alloy may be a stainless steel (SUS).

The thickness of the positive electrode current collector is, for example, 5 µm or more and 300 µm or less, but not limited thereto.

### (Separator)

As the separator, any separator used in lithium secondary batteries and lithium-ion secondary batteries may be used without any particular limitation. Such a separator is a porous sheet having ion permeability and insulating properties. The porous sheet includes, for example, a porous film, a woven fabric, a non-woven fabric, and the like. The porous film may be a uniaxially or biaxially stretched sheet. The material of the porous sheet is not limited to a particular one, but may be a polymer material. Examples of polymer material include a polyolefin resin, a polyamide resin, a polyimide resin, and cellulose. Examples of the polyolefin resin include polyethylene, polypropylene, and a copolymer of ethylene and propylene. The porous sheet may include one kind of material, or may include two or more kinds of materials. The porous sheet may contain an additive as necessary. Examples of the additive include an inorganic filler.

The thickness of the separator is not particularly limited, and may be selected, for example, from a range of 5 µm or more and 300 µm or less. The thickness of the separator is, for example, 5 µm or more and 50 µm or less.

The separator may have a heat-resistant layer as a surface layer on at least one side. That is, the separator may include a base material and a heat-resistant layer. The heat-resistant layer is formed on at least one principal surface selected from two principal surfaces of the base material. The heat-resistant layer is electrically insulative.

The thickness of the heat-resistant layer may be 3% to 50% of the thickness of the separator. When the heat-resistant layers are each formed on each of the two principal surfaces of the base material, their total may be 3% to 50% of the thickness of the separator.

The heat-resistant layer can suppress the base material from shrinking when the temperature of the electrode group rises excessively. Shrinkage of the base material tends to cause a short circuit between the positive electrode and the negative electrode, easily leading to a further rise of the temperature of the electrode group. When the separator includes a heat-resistant layer, the shrinkage of the base material can be suppressed, and thus, a further rise of the temperature of the electrode group can be suppressed.

As the base material, the already-described porous sheet, that is, a separator used in lithium secondary batteries and lithium-ion secondary batteries, may be used. The base material may be, for example, a porous film containing a polyolefin resin. Polyolefin resins are desirable because they are excellent in durability and have a function of closing the pores when the temperature rises to a certain level (i.e., a shutdown function). The base material may be of a single-layer structure, a two-layer structure, or a three- or more-layer structure.

The heat-resistant layer may contain inorganic particles (or inorganic filler) and a polymer (or polymer or resin). The polymer binds the inorganic particles to the base material. The polymer is desirably a heat-resistant resin that has higher heat resistance than the major component of the base material. The heat-resistant layer may contain inorganic particles as a major component (e.g., 80 mass% or more), or may contain a heat-resistant resin as a major component (e.g., 40 mass% or more). The heat-resistant layer may contain a heat-resistant resin, without containing inorganic particles.

The heat-resistant resin may be a polyamide resin, a polyimide resin, a polyamide-imide resin, and the like. In particular, it is preferable to include at least one selected from the group consisting of an aromatic polyamide, an aromatic polyimide, and an aromatic polyamide-imide. These are known as polymers having particularly high heat resistance. In view of heat resistance, preferred are aramids, i.e., meta-aramids (meta-type wholly-aromatic polyamides) and para-aramids (para-type wholly-aromatic polyamides).

The inorganic particles are constituted of an insulating inorganic compound. Examples of the materials for the inorganic particles include an oxide, an oxide hydrate, a hydroxide, a nitride, a carbide, and a sulfide, which may contain a metal element.

Specific examples thereof include aluminum oxide, boehmite, magnesium oxide, titanium oxide, zirconium oxide, silicon oxide, yttrium oxide, zinc oxide, silicon nitride, aluminum nitride, boron nitride, titanium nitride, silicon carbide, boron carbide, barium sulfate, and aluminum hydroxide. In particular, at least one selected from the group consisting of aluminum oxide, boehmite, talc, titanium oxide, and magnesium oxide is preferred, in terms of electrical insulation, heat resistance, and other properties.

The inorganic particles may contain a lithium-containing phosphate. The lithium-containing phosphate may be at least one selected from the group consisting of lithium phosphate (Li₃PO₄), dilithium hydrogen phosphate (Li₂HPO₄), and lithium dihydrogen phosphate (LiH₂PO₄). Among them, lithium phosphate is preferred because of its high effectiveness in suppressing the heat generation in the battery in the event of abnormality.

The average particle diameter of the inorganic particles may be, for example, 0.2 µm to 2 µm, but not limited thereto. The average particle diameter of the lithium-containing phosphate may be 0.1 µm to 1.0 µm, or 0.1 µm to 0.5 µm. By setting the average particle diameter to 0.1 µm or more, sufficient pores necessary for impregnation of the nonaqueous electrolyte can be ensured. By setting the average particle diameter to 1.0 µm or less, a heat-resistant layer packed at a high density with a lithium-containing phosphate can be formed.

In the inorganic particles contained in the heat-resistant layer, the proportion of the lithium-containing phosphate is desirably 20 mass% or more, and may be 50 mass% or more. A first layer containing a lithium-containing phosphate only as inorganic particles, or a first layer containing a lithium-containing phosphate as a major component (e.g., 60 mass% or more of the inorganic particles) may be laminated with a second layer other than that. The second layer may only contain inorganic particles other than the lithium-containing phosphate, may contain inorganic particles other than the lithium-containing phosphate in a proportion of 60 mass% or more, or may contain a heat-resistant resin only.

### (Nonaqueous electrolyte)

The nonaqueous electrolyte may be any nonaqueous electrolyte that has lithium-ion conductivity, and contains a solvent, and an electrolyte salt dissolved in the solvent. The solvent contains an ether compound as a major component. The electrolyte salt includes at least a lithium salt. As the lithium salt dissolves in the solvent, lithium ions and anions are generated. The nonaqueous electrolyte may be in a liquid form, or the nonaqueous electrolyte in a liquid from may be gelled with a polymer that absorbs the solvent.

Examples of the solvent include, in addition to the ether compound, an ester compound, a nitrile compound, an amide compound, and halogen-substituted derivatives thereof. The nonaqueous electrolyte may contain these nonaqueous solvents singly, or in combination of two or more kinds. Examples of the halogen-substituted derivatives include fluorides.

The ester compound includes, for example, a carbonic acid ester, a carboxylic acid ester, and the like. Examples of a cyclic carbonic acid ester include ethylene carbonate, propylene carbonate, and fluoroethylene carbonate (FEC). Examples of a chain carbonate ester include dimethyl carbonate (DMC), ethyl methyl carbonate (EMC), and diethyl carbonate (DEC). Examples of a cyclic carboxylic acid ester include γ-butyrolactone, and γ-valerolactone. Examples of a chain carboxylic acid ester include ethyl acetate, methyl propionate, and methyl fluoropropionate.

As the ether compound, a cyclic ether and a chain ether are exemplified, and in particular, it is desirable to use a first ether compound (non-fluorinated ether) represented by a general formula (1):

R1-(OCH₂CH₂)ₙ-OR2

(in the formula (1), R1 and R2 are each independently an alkyl group having 1 to 5 carbon atoms, and n is 1 to 3).

The lowest unoccupied molecular orbital (LUMO) of the non-fluorinated ether resides at a higher energy level. Therefore, the non-fluorinated ether is unlikely to be reductively decomposed even upon contacting with lithium metal having strong reducing power. Furthermore, since oxygen in the non-fluorinated ether backbone strongly interacts with lithium ions, the lithium salt contained as an electrolyte salt in the nonaqueous electrolyte can be easily dissolved.

The non-fluorinated ether is a suitable solvent for the nonaqueous electrolyte of the lithium secondary battery in that it suppresses the side reaction between lithium metal and the nonaqueous electrolyte and enhances the solubility of the lithium salt in the solvent.

Specific examples of the first ether compound (non-fluorinated ether) include 1,2-dimethoxyethane, 1,2-diethoxyethane, 1,2-dibutoxyethane, diethylene glycol dimethyl ether, diethylene glycol diethyl ether, and diethylene glycol ethyl methyl ether, diethylene glycol dibutyl ether, and triethylene glycol dimethyl ether. The first ether compound may be used singly or in combination of two or more kinds.

The ether compound may include a fluorinated ether. The interaction of the oxygen in the ether backbone in the fluorinated ether with lithium ions is small relative to that in the non-fluorinated ether. This is presumably because the strong electronegativity of fluorine atoms attracts electrons of the whole molecule inward the nuclei, to lower the orbital level of the lone pair electrons on the oxygen in the ether backbone, which would otherwise interact with lithium ions.

Among the fluorinated ethers, it is desirable to use a second ether compound represented by a general formula (2):

Cₐ₁H_{b1}F_{c1}O_{d1}(CF₂OCH₂)Cₐ₂H_{b2}F_{c2}O_{d2}

(in the formula (2), a1 ≥ 1, a2 ≥ 0, b1 ≤ 2a1, b2 ≤ 2a2, c1 = (2a1+1)-b1, c2 = (2a2+1)-b2, d1 ≥ 0, and d2 ≥ 0).

As the ether compound, a fluorinated ether and a non-fluorinated ether may be used in combination. For example, when the second ether compound is used together with the first ether compound, the charge-discharge reactions in the lithium secondary battery can proceed more uniformly. This is presumably because the balance of solvation energy between the ether compound and the lithium ions improves.

The fluorination rate of the second ether compound may be 60% or more. The fluorination rate of the second ether compound refers to a ratio of the number of fluorine atoms to the total number of fluorine atoms and hydrogen atoms in the second ether compound, which is expressed by a percentage (%).

Specific examples of the second ether compound (fluorinated ether) include 1,1,2,2-tetrafluoroethyl 2,2,2-trifluoroethyl ether, and 1,1,2,2-tetrafluoroethyl 2,2,3,3-tetrafluoropropyl ether. The second ether compound may be used singly, or in combination of two or more kinds.

The proportion of the total amount of the first ether compound and the second ether compound in the whole solvent may be 80 vol% or more. When the proportion of the total amount is 80 vol% or more, the effect of improving the cycle characteristics of the lithium secondary battery becomes more remarkable.

The volume ratio V1/V2 of a volume V1 of the first ether compound to a volume V2 of the second ether compound is preferably 1/0.5 to 1/4, more preferably 1/0.5 to 1/2.

The anions of the lithium salt may be any known anions that are used for a nonaqueous electrolyte in a lithium secondary battery. Specific examples thereof include BF₄⁻, ClO₄⁻, PF₆⁻, CF₃SO₃⁻, CF₃CO₂⁻, imide anions, and oxalate complex anions.

In view of suppressing the dendritic deposition of lithium metal, the electrolyte salt may include at least one selected from the group consisting of an imide anion, PF₆⁻, and an oxalate complex anion. In particular, an oxalate complex anion has a tendency to allow lithium metal to deposit uniformly in the form of fine particles, through interaction with lithium.

Examples of the imide anion include N(SO₂F)₂⁻, N(SO₂CF₃)₂⁻, and N(CₘF₂ₘ₊₁SO₂)ₓ(CₙF₂ₙ₊₁SO₂)_{y}⁻, where m and n are each independently an integer of 0 or 1 or more, x and y are each independently 0, 1, or 2, and x+y = 2. In particular, bis(fluorosulfonyl)imide anion (N(SO₂F)₂⁻) is preferred. It is desirable therefore that the lithium salt includes lithium bis(fluorosulfonyl)imide (hereinafter sometimes referred to as "LiFSI").

Examples of the oxalate complex anion include bisoxalate borate anion, difluorooxalate borate anion (BF₂(C₂O₄)⁻), PF₄(C₂O₄)⁻, and PF₂(C₂O₄)₂⁻. In particular, difluorooxalate borate anion (BF₂(C₂O₄)⁻) is preferred. It is desirable therefore that the lithium salt includes lithium difluorooxalate borate (hereinafter sometimes referred to as "LiFOB").

As described above, the electrolyte salt desirably include at least one selected from the group consisting of LiPF₆, an imide salt, and an oxalate complex salt. The concentration of the lithium salt in the nonaqueous electrolyte is, for example, 0.5 mol/L or more and 3.5 mol/L or less. The concentration of the oxalate complex salt in the nonaqueous electrolyte may be set to 0.05 mol/L or more and 1 mol/L or less.

In the following, an example of the lithium secondary battery according to the present embodiment will be specifically described with reference to the drawing. For the constituent elements of the below-described example of the lithium secondary battery, those as described above can be adopted. Also, the constituent elements of the below-described example can be changed based on the above description. The matters described below may be applied to the embodiment described above. In the lithium secondary battery described below, constituent elements that are not essential for the lithium secondary battery according to the present disclosure may be omitted. In the drawing below, in order to facilitate understanding, the scales of the constituent elements are changed.

FIG. 1 is a schematic longitudinal cross-sectional view of a pin-type cylindrical lithium secondary according to an embodiment of the present invention. A cylindrical lithium secondary battery 100 includes: a battery case 20 of a bottomed cylindrical shape having an opening; a wound electrode group 10 and a nonaqueous electrolyte (not shown) which are housed in the battery case 20; and a sealing member 40 sealing the opening of the battery case 20. The electrode group 10 is constituted of a positive electrode 11, a negative electrode 12, and a separator 13 interposed therebetween.

The sealing member 40 is hat-shaped and includes a ring-shaped flange (brim 40a), and cylindrical terminal portions 40b and 40c protruding in the thickness direction from the inner periphery of the brim 40a. A ring-shaped insulating gasket 30 is disposed on the periphery of the sealing member 40, so as to cover the brim 40a. The open end of the battery case 20 is bent inward via the gasket 30 and crimped onto the periphery of the sealing member 40, so that the battery case 20 is electrically insulated from the sealing member 40 and the battery case 20 is sealed.

A space is formed between the upper end surface (top surface) of the electrode group 10 and the bottom surface of the sealing member 40. In this space, a first insulating ring 50A is disposed, to restrict the contact between the electrode group 10 and the sealing member 40.

A donut-shaped second insulating ring 50B formed of an electrically insulating material is disposed so as to cover the outer surface of the bent open end of the battery case 20 and the surface of the gasket 30 therearound.

One end of a positive electrode current collector lead 60 is connected to the positive electrode 11 by welding or other means, and the other end is passed through a hole formed in the center of the first insulating ring 50A and connected to the bottom surface of the sealing member 40 by welding or other means. That is, the positive electrode 11 and the sealing member 40 are electrically connected via the positive electrode current collector lead 60, and the sealing member 40 functions as an external positive electrode terminal.

One end of a negative electrode current collector lead 70 is connected to the negative electrode 12 on the outermost layer of the electrode group 10 by welding or other means. The other end of the negative electrode current collector lead 70 is connected to the inner wall of the battery case 20 at a welding point 70a. That is, the negative electrode 12 and the battery case 20 are electrically connected via the negative electrode current collector lead 70, and the battery case 20 functions as an external negative electrode terminal. The welding point 70a is formed, for example, on the inner wall of the battery case 20 closer to the opening than the upper end surface of the electrode group 10.

### [Examples]

The present invention will be specifically described below with reference to Examples and Comparative Examples. The present invention, however, is not limited to the following Examples.

In the following Examples and Comparative Examples, a cylindrical lithium secondary battery as shown in FIG. 1 was fabricated. In the cylindrical lithium secondary battery, outer diameter R = 4 mm, and height H = 25 mm. The packing ratio was set within the range of 75% to 90%.

### (Example 1)

### (1) Production of positive electrode 11

N-methyl-2-pyrrolidone (NMP) was added as a dispersion medium, to 100 parts by mass of a lithium-containing transition metal oxide (NCA: positive electrode active material) containing Li, Ni, Co, and Al (the molar ratio of Li to the total of Ni, Co, and Al was 1.0) and having a layered rock-salt type crystal structure, 4 parts by mass of acetylene black serving as a conductive material, and 4 parts by mass of polyvinylidene fluoride (PVdF) serving as a binder, and mixed together, to prepare a positive electrode slurry. The positive electrode slurry was applied onto both surfaces of an aluminum foil (thickness 15 µm) serving as a positive electrode current collector, and dried, and then, compressed in the thickness direction, to form a positive electrode 11 (thickness 80 µm) with positive electrode mixture layers on the surfaces of the positive electrode current collector. In the positive electrode 11, in its production, an exposed portion of the positive electrode current collector was provided in the width direction of the positive electrode (direction parallel to the winding axis of the electrode group), and a ribbon-shaped positive electrode current collector lead 60 (width 1. 0 mm, thickness 0.05 mm) made of aluminum was connected to the exposed portion.

### (2) Production of negative electrode 12

A negative electrode 12 (thickness: 50 µm) was produced by attaching a 20 µm-thick lithium metal foil on both surfaces of a copper foil (thickness 10 µm) serving as a negative electrode current collector. An exposed portion of the negative electrode current collector was provided at a portion corresponding to the outermost layer of the negative electrode 12 in an electrode group 10, and one end of a ribbon-shaped negative electrode current collector lead 70 (width 1.5 mm, thickness 0.05 mm) made of nickel was connected to the exposed portion.

### (3) Fabrication of electrode group 10

The positive electrode 11 and the negative electrode 12 were wound together, with a separator 13 interposed therebetween, to form the wound electrode group 10. An electrically insulating tape for fixation was attached to the end of the winding, to fix the electrode group 10. The separator used here was a 16 µm-thick porous film made of polyethylene.

### (4) Preparation of nonaqueous electrolyte

A nonaqueous electrolyte (electrolyte A) was prepared by dissolving LiFSI and LiFOB in a mixed solvent containing dimethoxyethane (DME) and 1,1,2,2-tetrafluoroethyl 2,2,3,3-tetrafluoropropyl ether (H(CF₂)₂CH₂O(CF₂)₂H) in a mass ratio of 25:75. At this time, the concentration of LiFSI in the nonaqueous electrolyte was set to 1.0 mol/L, and the concentration of LiFOB in the nonaqueous electrolyte was set to 0.05 mol/L.

### (5) Fabrication of cylindrical lithium secondary battery 100

The electrode group 10 obtained in the above (3) was inserted into a bottomed cylindrical battery case 20 having an opening and formed of a nickel-plated iron plate, and the other end of the negative electrode current collector lead 70 was welded to the inner wall of the battery case 20 at a welding point 70a. As for the welding point 70a, a first insulating ring 50A was disposed on the top of the electrode group 10, and the other end of the positive electrode current collector lead 60 extended from the electrode group 10 was passed through the hole in the first insulating ring 50A, and connected to the bottom surface of a sealing member 40 made of nickel-plated iron. On the periphery of the sealing member 40, a ring-shaped insulating gasket 30 was attached. The nonaqueous electrolyte prepared in the above (4) was injected into the battery case 20 in an amount of 2.5 µL per 1 mAh of discharge capacity. The sealing member 40 was placed at the opening of the battery case 20, and the opening end of the battery case 20 was crimped onto the periphery of the sealing member 40 via the gasket 30, to seal the opening. A butyl rubber-based insulating paint was applied in a donut shape, so as to cover the outer surface of the open end of the bent battery case 20 and the surface of the gasket 30, thereby to form a second insulating ring 50B. In this way, a cylindrical lithium secondary battery 100 (battery A1) with a rated capacity of 45 mAh was obtained.

### (Example 2)

A heat-resistant layer (thickness of 2 µm) containing aluminum oxide (Al₂O₃) particles, lithium phosphate (Li₃PO₄) particles, and aromatic polyamide in a mass ratio of 48:48:2 was formed on a positive-electrode-side surface layer of the porous film made of polyethylene which was the separator. Except for using the separator with such a heat-resistant layer, in the same manner as in Example 1, a cylindrical lithium secondary battery (battery A2) was fabricated.

### (Example 3)

A cylindrical lithium secondary battery (battery A3) was fabricated in the same manner as in Example 1, except that the electrolyte A was injected into the battery case in an amount of 4.2 µL per 1 mAh of discharge capacity, and the separator having the same heat-resistant layer as in Example 2 was used.

### (Example 4)

A cylindrical lithium secondary battery (battery A4) was fabricated in the same manner as in Example 1, except that the electrolyte A was injected into the battery case in an amount of 6.5 µL per 1 mAh of discharge capacity, and the separator having the same heat-resistant layer as in Example 2 was used.

### (Comparative Example 1)

A nonaqueous electrolyte (electrolyte B) was prepared by dissolving LiPF₆ in a mixed solvent containing ethylene carbonate (EC), ethyl methyl carbonate (EMC), and dimethyl carbonate (DMC) in a mass ratio of 20:20:60. At this time, the concentration of LiPF₆ in the nonaqueous electrolyte was set to 1.0 mol/L. A cylindrical lithium secondary battery (battery B1) was fabricated in the same manner as in Example 1, except that in place of the electrolyte A, the electrolyte B was injected into the battery case in an amount of 2.5 µL of per 1 mAh of discharge capacity.

### (Comparative Example 2)

A cylindrical lithium secondary battery (battery B2) was fabricated in the same manner as in Comparative Example 1, except that the electrolyte B was injected into the battery case in an amount of 6.5 µL per 1 mAh of discharge capacity, and the separator having the same heat-resistant layer as in Example 2 was used.

### (Comparative Example 3)

A cylindrical lithium secondary battery (battery B3) was fabricated in the same manner as in Comparative Example 1, except that the electrolyte B was injected into the battery case in an amount of 2.2 µL per 1 mAh of discharge capacity, and the separator having the same heat-resistant layer as in Example 2 was used.

### (Evaluation)

With respect to the battery fabricated in each Example, a capacity retention rate (100 cycles) was measured, and a nail penetration test was performed in the following procedure.

### (Capacity retention rate)

Charging was performed at a constant current of 0.1 It until the closed circuit voltage of the battery reached 4.2 V, and then constant-voltage charging was performed at 4.2 V until the current reached 0.05 It. Then, after the rest for 20 minutes, discharging was performed at a constant current of 0. 1 It until the closed circuit voltage of the battery reached 2.5 V This cycle was repeated 100 cycles. The ratio (%) of the discharge capacity at the 100th cycle to the discharge capacity at the 1st cycle was determined as a capacity retention rate.

### (Nail penetration test)

In a 25 °C environment, the battery was charged at a constant current of 0.3 It until the battery voltage reached 4.2 V, and then, continuously, constant-voltage charged until the current value reached 0.05 It. Then, in a 25 °C environment, the tip of a round nail (diameter 0.9 mm) was brought into contact with the center of the charged battery, and driven into the battery at a speed of 1 mm/sec. The driving of the round nail was stopped immediately after the detection of a battery voltage drop (Δ50 mV) due to internal short circuit. The surface temperature of the battery was measured one minute after the battery was short-circuited.

The results of Examples and Comparative Examples are shown in Table 1.

**[Table 1]**

| battery | amount of injected electrolyte | major solvent | heat-resistant layer | capacity retention rate | surface temperature |
|---|---|---|---|---|---|
| | µL/mAh | | | % | °C |
| A1 | 2.5 | ether | without | 92 | < 120 |
| A2 | 2.5 | ether | with | 91 | < 120 |
| A3 | 4.2 | ether | with | 94 | < 120 |
| A4 | 6.5 | ether | with | 94 | < 120 |
| B1 | 2.5 | carbonic acid ester | without | 63 | 150 < |
| B2 | 6.5 | carbonic acid ester | with | 67 | 150 < |
| B3 | 2.2 | ether | with | 83 | < 120 |

As shown in Table 1, the batteries A1 to A4, in which the solvent contained an ether compound as a major component and the amount of nonaqueous electrolyte per 1 mAh of discharge capacity was 2.5 µL or more and 6.5 µL or less, all exhibited excellent capacity retention rate. Furthermore, regardless of with or without the heat-resistant layer in the separator, these batteries exhibited high safety in the nail penetration test. On the other hand, in the battery B3 in which the amount of nonaqueous electrolyte per 1 mAh of discharge capacity was less than 2.5 µL, the capacity retention rate was insufficient. In both of the batteries B 1 and B2, in which the solvent contained a carbonic acid ester as a major component, the capacity retention rate was low, and even in the battery B 1, in which the amount of inj ected electrolyte was 2.5 µL, it was difficult to ensure sufficient safety in the nail penetration test.

### [Industrial Applicability]

The present disclosure is suitable for a cylindrical lithium secondary battery (especially for a pin-shaped secondary battery), and is suitably applicable as a power source for various portable electronic devices for which a small power source is required, such as glasses (3D glasses etc.), hearing aids, stylus pens, and wearable terminals.

Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure. Accordingly, it is intended that the appended claims be interpreted as covering all alterations and modifications as fall within the true spirit and scope of the invention.

### [Reference Signs List]

10: wound electrode group
   11: positive electrode
   12: negative electrode
   13: separator
20: battery case
30: gasket
40: sealing member
   40a: brim
   40b, 40c: terminal portion
50A: first insulation ring
50B: second insulation ring
60: positive electrode current collector lead
70: negative electrode current collector lead
   70a: welding point
100: cylindrical secondary battery

## Claims

1. A cylindrical lithium secondary battery, comprising:
a battery case of a bottomed cylindrical shape having an opening;
a wound electrode group and a nonaqueous electrolyte which are housed in the battery case; and
a sealing member sealing the opening, wherein
the wound electrode group includes a positive electrode, a negative electrode, and a separator interposed between the positive electrode and the negative electrode,
at the negative electrode, lithium metal deposits during charging and dissolves in the nonaqueous electrolyte during discharging,
the nonaqueous electrolyte contains an electrolyte salt, and a solvent,
the solvent contains an ether compound as a major component, and
an amount of the nonaqueous electrolyte per 1 mAh of discharge capacity of the lithium secondary battery is 2.5 µL or more and 6.5 µL or less.

2. The cylindrical lithium secondary battery of claim 1, wherein an outer diameter R of the lithium secondary battery is 3 mm or more and 6.5 mm or less, and a height H of the lithium secondary battery is 15 mm or more and 65 mm or less.

3. The cylindrical lithium secondary battery according to claim 1 or 2, wherein the amount of the nonaqueous electrolyte per 1 mAh of discharge capacity is 2.9 µL or more and 6.5 µL or less.

4. The cylindrical lithium secondary battery according to any one of claims 1 to 3, wherein the separator has a heat-resistant layer as a surface layer on at least one side.

5. The cylindrical lithium secondary battery according to claim 4, wherein the heat-resistant layer includes inorganic particles, and a polymer.

6. The cylindrical lithium secondary battery according to claim 5, wherein the inorganic particles include a lithium-containing phosphate.

7. The cylindrical lithium secondary battery according to any one of claims 1 to 6, wherein the ether compound includes a fluorinated ether.

8. The cylindrical lithium secondary battery according to claim 7, wherein the ether compound further includes a non-fluorinated ether.

9. The cylindrical lithium secondary battery according to any one of claims 1 to 8, wherein the electrolyte salt includes lithium bis(fluorosulfonyl)imide.

10. The cylindrical lithium secondary battery according to any one of claims 1 to 9, wherein the electrolyte salt includes an oxalate complex salt.

11. The cylindrical lithium secondary battery according to claim 10, wherein the oxalate complex salt is lithium difluorooxalate borate.
